# EUROPÄISCHE PATENTSCHRIFT

(11) **EP 0 507 185 B1**
(45) Veröffentlichungstag und Bekanntmachung des Hinweises auf die Patenterteilung: **29.11.1995**
(21) Anmeldenummer: 92105021.7
(22) Anmeldetag: 24.03.1992
(51) Int. Cl.: F16G 3/04, F16G 3/16

(54) **Förderbandverbinderelement sowie Verfahren und Vorrichtung zu seiner Befestigung**
Conveyor belt fastening element and method and device for its mounting
Elément de liaison de bande transporteuse, et procédé et dispositif pour sa fixation

(30) Priorität: 04.04.1991 DE 4110818
(43) Veröffentlichungstag der Anmeldung: 07.10.1992
(73) Patentinhaber: MATO Maschinen- und Metallwarenfabrik Curt Matthaei GmbH & Co KG, D-63071 Offenbach (DE)
(72) Erfinder: Herold, Wolfgang, W-6050 Offenbach am Main (DE)
(74) Vertreter: Schieferdecker, Lutz, Dipl.-Ing.

(56) Entgegenhaltungen:
- DE-B- 2 545 401
- DE-B- 2 920 461
- FR-A- 2 354 485

## Beschreibung

Die Erfindung bezieht sich auf ein Förderbandverbinderelement mit Schenkeln und einer diese verbindenden Öse für einen Kupplungsstab sowie mit Durchtrittsöffnungen für Krampen in den Schenkeln und mit Auflageflächen für die freien Enden der Schenkel der Krampen, und sie bezieht sich ferner auf ein Verfahren und eine Vorrichtung zum Befestigen eines derartigen Verbinderelements an einem Förderbandende.

Ein Förderbandverbinderelement der vorgenannten Art ist bekannt (DE-C-29 20 461). Dort sind die Auflageflächen für die unter einem rechten Winkel abgebogenen freien Enden der Schenkel der Krampen mit zur Gurtoberfläche paralleler Erstreckung etwas vertieft in dem einen Schenkel des Verbinderelements angeordnet. Im anderen Schenkel des Verbindungselements sind ebenfalls zur Gurtoberfläche parallele Vertiefungen vorgesehen, welche die Krampenstege aufnehmen, welche die beiden Schenkel des Krampens miteinander verbinden. Die Krampen werden durch die Durchtrittsöffnungen in den Schenkein des Verbinderelements geführt und durch den Gurt eingeschlagen, worauf die überstehenden freien Krampenenden umgebogen werden, so daß sie sich außenseitig an den Schenkeln des Verbinderelements abstützen und diese an den Gurt andrücken. Gurtschäden im Bereich des Verbinderelements sind dabei nicht zu befürchten.

Obwohl derartige Förderbandverbinderelemente die an sie gestellten Anforderungen grundsätzlich in zufriedenstellender Weise erfüllen, treten doch immer wieder Probleme auf, wenn die freien Enden der Schenkel der Krampen nach dem Umbiegen geringfügig zurückfedern und daher im Betrieb innerhalb der Auflageflächenvertiefung noch etwas hochstehen. Die freien Schenkelenden können dann nämlich unter Umständen beim Lauf über die Tragerollen frei schwingen, was zu Biegewechselbeanspruchungen mit der Gefahr eines Dauerbruchs führt.

Die Gefahr eines Dauerbruchs durch die Belastung mit Biegewechselbeanspruchungen im Betrieb ist vor allem dann gegeben, wenn die Schenkel der Krampen im Übergangsbereich zwischen ihren mittleren Teilen und den jeweiligen freien Enden bereits beim Befestigen des Förderbandverbinderelementes am Förderbandende vorgeschädigt werden. Durch eine beim Einschlagen und Umbiegen der Krampen auftretende Stauchung der mittleren Teile können nämlich feine Risse im Übergangsbereich zu den freien Enden der Schenkel entstehen, die dann auf Grund der Biegewechselbeanspruchungen verhältnismäßig rasch zum Dauerbruch führen.

Aus der FR-A-844 752 ist ein Förderbandverbinderelement bekannt, bei dem der eine Verbinderschenkel nicht nur Durchtrittsöffnungen aufweist, durch welche die freien Enden der Krampen beim Einschlagen nach außen durchtreten, sondern weitere Durchtrittsöffnungen, durch welche die Krampenspitzen wieder zurückgeführt und in den Gurt eingedrückt werden. Entsprechendes gilt für eine Alternativausführung, bei der keine gesonderten Krampen vorgesehen sind sondern am ausgestanzten Verbinderelement Nadelteile einstückig angeformt sind, die in der Befestigungsstellung den Gurt quer zu seiner Erstreckungsrichtung durchdringen und mit einer Biegung von etwa 180° unter Umgreifen eines Schenkelabschnitts des Verbinderelements mit ihrer Spitze wieder in den Gurt zurückgeführt sind.

Hier sind zwar keine freischwingenden Krampenschenkelenden zu befürchten, jedoch weist dieses bekannte Verbinderelement am Rande der Durchtrittsöffnungen geneigt angeordnete und vorstehende Laschen auf, die dazu dienen, die Spitzen der Nadelteile derart zu leiten, daß sie wieder in das Innere des Gurtes getrieben werden können, was ebenfalls mit einem zusätzlichen Arbeitsaufwand verbunden ist.

Der Erfindung liegt die Aufgabe zugrunde, das eingangs beschriebene Förderbandverbinderelement auf einfache Weise so zu gestalten, daß den Biegewechselbeanspruchungen vorgebeugt wird und eine erhöhte Bruchsicherheit erreicht wird, wobei sich die Befestigung am Gurt mittels eines einfachen Verfahrens und einer unkomplizierten Vorrichtung zuverlässig und sicher bei gleichzeitig schonender Beanspruchung der Krampen durchführen läßt.

Zur Lösung dieser Aufgabe ist erfindungsgemäß ein Förderbandverbinderelement vorgesehen, bei dem die Auflageflächen zum Umbiegen der Schenkel der Krampen um mehr als 90° vorgesehen und dazu geneigt sind, und daß die Neigung jeweils von den Durchtrittsöffnungen der Krampen zur Öse hin sowie auf das Förderband zu gerichtet ist.

Bei einer derartigen Gestaltung mit geneigten Auflageflächen stehen die freien Enden der Schenkel der Krampen nicht mehr hoch und werden auch nicht mehr von Tragerollen zu freien Schwingungen angeregt. Biegewechselbeanspruchungen und Dauerbrüche in der bisher bekannten Form sind daher ausgeschlossen. Gleichwohl verbleiben die um mehr als 90° umgebogenen freien Enden der Krampenschenkel vollständig auf der Außenseite des betreffenden Verbinderschenkels, was ein einfaches Umlegen der freien Enden der Krampenschenkel ohne besondere Zusatzmaßnahmen ermöglicht.

Die Erfindung bezieht sich ferner auf ein Verfahren zum Befestigen von erfindungsgemäßen Förderbandverbinderelementen an den Enden von Förderbändern mit Hilfe von Krampen, wobei zunächst die Schenkel der Krampen durch das Förderbandende und durch die Durchtrittsöffnungen in den Schenkeln des Förderbandverbinderelements getrieben sowie zunächst teilweise umgelegt werden und dann in einem weiteren Arbeitsschritt vollends umgelegt werden, wie es aus der FR-A-1 313 653 bekannt ist. Erfindungsgemäß wird dieses Verfahren nun so durchgeführt, daß die freien Enden der Schenkel der Krampen in eine zum Förderbandende hin geneigte Lage gedrückt werden.

Die Erfindung bezieht sich schließlich auch auf eine Vorrichtung zur Durchführung des erfindungsgemäßen Verfahrens, wobei je mindestens ein bewegbares Unterwerkzeug und ein bewegbares Oberwerkzeug und jeweils Antriebe vorgesehen sind, wie es aus der FR-A-1 313 653 bekannt ist. Hier dient das Oberwerkzeug zum Eintreiben der Krampen, und es sind zwei verschiedene Unterwerkzeuge vorgesehen, nämlich ein horizontal verschiebbares Werkzeug zum Vorbiegen und ein weiteres Werkzeug zum Fertigbiegen der vorstehenden Krampenenden, was einen kostenintensiven Werkzeugwechsel erforderlich macht.

Erfindungsgemäß ist die Vorrichtung so ausgebildet, daß das Unterwerkzeug zum Eintreiben und Abstützen der Krampen vorgesehen ist und daß das Oberwerkzeug einen Niederhalter und einen zunächst im wesentlichen parallel zur Oberfläche des Förderbandes und dann vertikal dazu bewegbaren Backen umfaßt.

Zweckmäßige Ausgestaltungen des erfindungsgemäßen Förderbandverbinderelements, des erfindungsgemäßen Verfahrens und der erfindungsgemäßen Vorrichtung ergeben sich aus den Unteransprüchen.

Die Erfindung wird nachstehend anhand eines Ausführungsbeispieles, das in der Zeichnung dargestellt ist, näher beschrieben. Dabei zeigen:
- Fig. 1:: eine schematische Darstellung eines Förderbandverbinderlementes im Schnitt mit einem Unterwerkzeug und einem Oberwerkzeug vor dem Umlegen der Schenkel einer Krampe in größerem Maßstab;
- Fig. 2:: eine Ansicht ähnlich Fig. 1, jedoch nach dem Umlegen der Schenkel der Krampe;
- Fig. 3:: einen Schnitt längs der Linie III-III in Figur 1 und
- Fig. 4:: zum Teil im Schnitt eine Ansicht eines Förderbandverbinderlementes an einem Förderbandende mit einer durchgesteckten Krampe vor dem Umlegen der Schenkel.

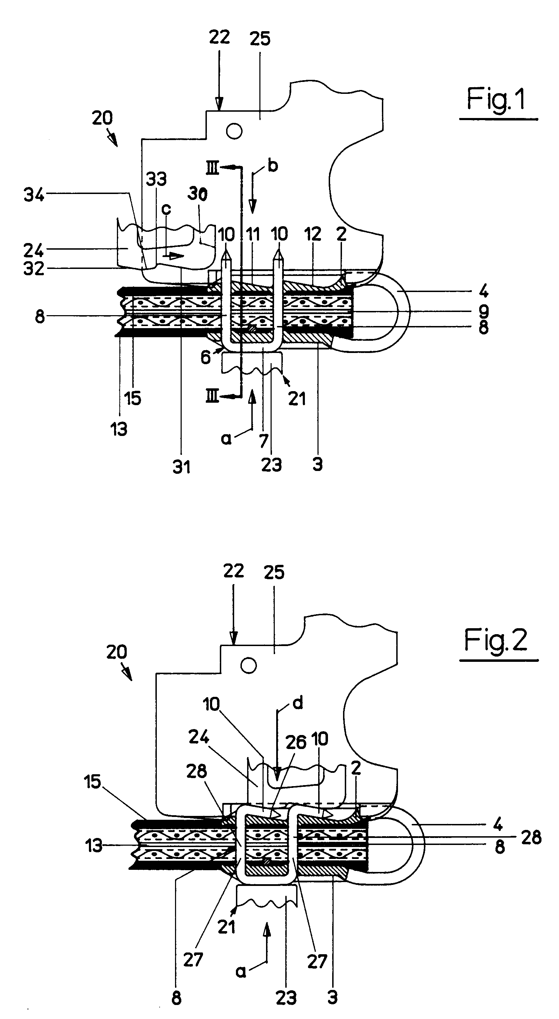

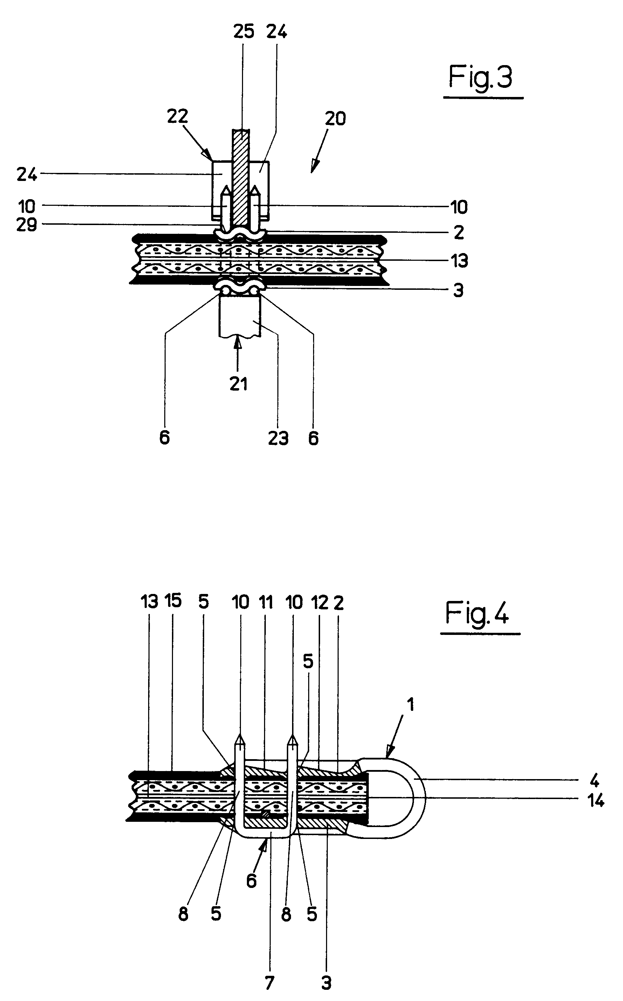

Ein Förderbandverbinderlement 1 besteht aus zwei Schenkeln 2 und 3 und einer diese verbindende Öse 4, die zur Aufnahme eines hier nicht näher interessierenden Kupplungsstabes dient. In den Schenkeln 2 und 3 befinden sich Durchtrittsöffnungen 5 für Krampen 6, von denen in den Figuren 1, 2 und 4 jedoch nur eine Krampe 6 zu sehen ist. Sie liegt im zusammengebauten Zustand mit ihrem Steg 7 außen an dem einen, in Fig. 4 unten liegenden Schenkel 3 des Förderbandverbinderelementes 1 an und durchgreift mit ihren Schenkeln 8 die Durchtrittsöffnungen 5 im Schenkel 8 sowie das Förderbandende 9 und die Durchtrittsöffnungen 5 im zweiten, in Fig. 4 oben liegenden Schenkel 2 des Förderbandverbinderelementes 1. Nach dem Durchstecken oder Durchtreiben ragen die freien Enden 10 der Schenkel 8 stehend aus dem zweiten Schenkel 2 des Förderbandverbinderelementes 1 heraus, wie es in den Fig. 1, 3 und 4 dargestellt ist.

Der Schenkel 2 des Förderbandverbinderelementes 1 weist geneigte Auflageflächen 11 und 12 für die freien Enden 10 der Schenkel 8 der Krampen 6 auf. Die Neigung dieser Auflageflächen 11 und 12 ist jeweils von den Durchtrittsöffnungen 5 der Krampen 6 zur Öse 4 hin sowie auf das Förderband 13 bzw. sein freies Ende 14 zu gerichtet. Die Auflageflächen 11, 12 liegen somit schräg zur Oberfläche 15 des Förderbandes 13 und sind ferner zueinander versetzt sowie im wesentlichen parallel zueinander angeordnet.

Von einer Vorrichtung 20 zum Befestigen von Förderbandverbinderlementen 1 an einem Förderband 13 sind in den Figuren 1 bis 3 jeweils nur Teile eines Unterwerkzeuges 21 und eines Oberwerkzeuges 22 dargestellt. Das Unterwerkzeug 21 umfasst einen in Richtung des Pfeiles a bewegbaren Druckstempel 23 und das Oberwerkzeug 22 umfasst einen in Richtung des Pfeiles b bewegbaren Niederhalter sowie zunächst in Richtung des Pfeiles c gemäß Fig. 1 und dann in Richtung des Pfeiles d gemäß Fig. 2 bewegbare Backen 24. Das Unterwerkzeuge 21 bzw. seine Teile und das Oberwerkzeug 22 bzw. seine Teile sind in einem in den Figuren nicht dargestellten, geeigneten Maschinengestell gelagert und mit den zur Durchführung der gewünschten Bewegungen erforderlichen Antrieben versehen.

Beim Befestigen von Förderbandverbinderelementen 1 mit Hilfe der Vorrichtung 20 werden zunächst die Schenkel 8 der Krampen 6 durch das Förderbandende 9 und durch die Schenkel 2, 3 der Förderbandverbinderelemente 1 getrieben. Hierzu dient der Druckstempel 23, der den bzw. die Krampen 6 in Richtung des Pfeiles a bewegt, während ein zum Oberwerkzeug 22 gehörender Niederhalter 25 den Schenkel 2 in seiner Position gemäß den Fig. 1 bis 3 hält.

Sobald die Schenkel 8 der Krampen 6 durch das Förderbandende 9 und durch die Schenkel 2, 3 des Förderbandverbinderelementes 1 getrieben sind, werden ihre freien Enden 10 zunächst nur teilweise umgelegt. Dies geschieht mit Hilfe des bzw. der in Richtung des Pfeiles c in Fig. 1 beweglichen Backen 24 . Hierdurch gelangen die freien Enden 10 der Schenkel 8 in eine Lage, die annähernd parallel zur Oberfläche 15 des Förderbandes 13 ist. In einem weiteren Arbeitsschritt werden die freien Enden 10 der Krampen 6 sodann vollends bis zur Anlage auf dieAuflageflächen 11, 12 umgelegt. Dies geschieht ebenfalls mit Hilfe des bzw. der Backen 24, die hierzu eine Bewegung in Richtung des Pfeiles d in Fig. 2 durchführen. Bei diesem letzten Arbeitsschritt werden die freien Enden 10 der Krampen 6 bis in eine schräg zur Oberfläche 15, auf das Innere des Förderbandes 13 hin gerichtete Lage gedrückt. Der Druckangriff erfolgt dabei an den freien Enden 10 der Schenkel 8 der Krampen 6 nur in einem definierten Bereich nahe bei den Spitzen 26 der Krampen 6 und somit nicht unmittelbar in Verlängerung, sondern zu den Ösen 4 hin versetzt neben den Ebenen 27, in denen die mittleren Teile 28 der Schenkel 8 liegen (Fig. 2).

Die freien Enden 10 der Krampen 6 liegen nach dem vollständigen Herstellen der Verbindung weitgehend versenkt im Schenkel 2 des Förderbandverbinderelementes 1, da die Auflageflächen 11, 12 für die freien Enden 10 zugleich der Boden von rillenförmigen Vertiefungen 29 in den Schenkeln 2 der Förderbandverbinderelemente 1 sind.

Der bzw. die Backen 24 an dem Oberwerkzeug 22 bewegen sich gemäß denPfeilen c und d zunächst im wesentlichen parallel zur Oberfläche 13 des Förderbandes 15 und dann im wesentlichen vertikal zu der ersten Bewegungsrichtung. Das Umlegen der freien Enden 10 der Krampen 6 erfolgt dabei mit Hilfe einer stirnseitig am Backen 24 befindlichen Biegefläche 30. Krampenseitig weist jeder Backen 24 entsprechend der Zahl der Schenkel 8 in Richtung des Pfeiles c hintereinander angeordnete sowie zueinander versetzte, im wesentlichen parallele sowie schräg zur Oberfläche 15 des Förderbandes 13 angeordnete Druckflächen 31 und 32 auf. Die Biegefläche 30 geht bogenförmig in die vordere Druckfläche 31 über. Eine zum Förderband 13 hin gerichtete Schrägfläche 33 und eine daran anschließende, parallel zur Oberfläche 15 des Förderbandes 13 gerichtete Zwischenfläche 34 befinden sich zwischen der vorderen Druckfläche 31 und der hinteren Druckfläche 32 eines jeden Backens 24 (Fig. 1).

Zweckmässig ist es ferner, wenn die Schenkel 8 der Krampen 6 ohne Spiel, vorzugsweise sogar mit Press-Sitz, in den Durchtrittsöffnungen 5 des Förderbandverbinderelementes 1 angeordnet sind.

## Patentansprüche

1. Förderbandverbinderelement mit Schenkeln (2, 3) und einer diese verbindenden Öse (4) für einen Kupplungsstab sowie mit Durchtrittsöffnungen (5) für Krampen (6) in den Schenkeln (2, 3) und mit Auflageflächen (11, 12) für die freien Enden (10) der Schenkel (8) der Krampen (6), dadurch gekennzeichnet, daß die Auflageflächen (11, 12) zum Umbiegen der Schenkel (8) der Krampen (6) um mehr als 90 Grad vorgesehen und dazu geneigt sind und daß die Neigung jeweils von den Durchtrittsöffnungen (5) der Krampen (6) zur Öse (4) hin sowie auf das Förderband (13) zu gerichtet ist.

2. Förderbandverbinderelement nach Anspruch 1, dadurch gekennzeichnet, daß die geneigten Auflageflächen (11, 12) zueinander versetzt sowie im wesentlichen parallel zueinander angeordnet sind.

3. Förderbandverbinderelement nach Anspruch 1 oder 2, dadurch gekennzeichnet, daß die Auflagefläche (10) jeweils der Boden einer Vertiefung (29) ist, die das freie Ende (10) der Schenkel (8) der Krampen (6) aufnimmt.

4. Verfahren zum Befestigen von Förderbandverbinderelementen (1) gemäß einem der Ansprüche 1 bis 3 an den Enden (9) von Förderbändern (13) mit Hilfe von Krampen (6), wobei zunächst die Schenkel (8) der Krampen (6) durch das Förderbandende (9) und durch die Schenkel (2, 3) der Förderbandverbinderelemente (1) getrieben sowie zunächst teilweise umgelegt werden und dann in einem weiteren Arbeitsschritt vollends umgelegt werden, dadurch gekennzeichnet, daß die freien Enden (10) der Schenkel (8) der Krampen (6) in eine zum Förderbandende (9) hin geneigte Lage gedrückt werden.

5. Verfahren nach Anspruch 4, dadurch gekennzeichnet, daß der Druckangriff an den freien Enden (10) der Schenkel (8) der Krampen (6) in einem definierten Bereich nahe bei den Spitzen (26) der Krampen (6) erfolgt.

6. Verfahren nach Anspruch 4 oder 5, dadurch gekennzeichnet, daß der Druckangriff an den freien Enden (10) der Schenkel (8) der Krampen (6) jeweils neben den Ebenen (27) erfolgt, in denen die mittleren Teile (28) der Schenkel (8) liegen.

7. Vorrichtung zur Durchführung des Verfahrens nach einem der Ansprüche 4 bis 6, wobei je mindestens ein bewegbares Unterwerkzeug (21) und ein bewegbares Oberwerkzeug (22) und jeweils Antriebe vorgesehen sind, dadurch gekennzeichnet, daß das Unterwerkzeug (21) zum Eintreiben und Abstützen der Krampen (6) vorgesehen ist und daß das Oberwerkzeug (22) einen Niederhalter (25) und einen zunächst im wesentlichen parallel zur Oberfläche 13 des Förderbandes (15) und dann vertikal dazu bewegbaren Backen (24) umfasst.

8. Vorrichtung nach Anspruch 7, dadurch gekennzeichnet, daß der zunächst parallel zur Oberfläche (13) des Förderbandes (15) bewegbare und dann vertikal dazu bewegbare Backen (24) stirnseitig eine Biegefläche (30) und krampenseitig entsprechend der Zahl der Schenkel (8) der Krampen (6) zueinander versetzte und im wesentlichen parallele sowie schräg zur Oberfläche (15) des Förderbandes (13) angeordnete Druckflächen (31, 32) aufweist, wobei die Biegefläche (30) ferner bogenförmig in die vordere Druckfläche (31) übergeht.

## Claims

1. A conveyor belt connector element having legs (2, 3) and an eye (4) connecting same for a coupling bar and having through openings (5) for staple members (6) in the legs (2, 3) and having contact surfaces (11, 12) for the free ends (10) of the legs (8) of the staple members (6), characterised in that the contact surfaces (11, 12) are provided for the legs (8) of the staple members (6) to be bent over through more than 90 degrees and are inclined for that purpose and that the inclination is respectively directed from the through openings (5) of the staple members (6) towards the eye and towards the conveyor belt (13).

2. A conveyor belt connector element according to claim 1 characterised in that the inclined contact surfaces (11, 12) are displaced relative to each other and are arranged substantially parallel to each other.

3. A conveyor belt connector element according to claim 1 or claim 2 characterised in that the contact surface (10) is in each case the bottom of a recess (29) which accommodates the free end (10) of the respective leg (8) of the staple members (6).

4. A method of fixing conveyor belt connector elements (1) according to one of claims 1 to 3 at the ends (9) of conveyor belts (13) by means of staple members (6), wherein firstly the legs (8) of the staple members (6) are driven through the conveyor belt end (9) and through the legs (2, 3) of the conveyor belt connector elements (1) and firstly partially bent over and then in a further working step completely bent over, characterised in that the free ends (10) of the legs (8) of the staple members (6) are pressed into a position of being inclined towards the conveyor belt end (9).

5. A method according to claim 4 characterised in that pressure is applied to the free ends (10) of the legs (8) of the staple members (6) in a defined region near the tips (26) of the staple members (6).

6. A method according to claim 4 or claim 5 characterised in that pressure is applied to the free ends (10) of the legs (8) of the staple members (6) in each case beside the planes (27) in which the central parts (28) of the legs (8) lie.

7. A device for carrying out the method according to one of claims 4 to 6 wherein there are respectively provided at least one movable bottom tool (21) and at least one movable top tool (22) and respective drive means, characterized in that the bottom tool (21) is provided for driving in and supporting the staple members (6) and that the top tool (22) includes a hold-down means (25) and a jaw (24) which is movable firstly substantially parallel to the surface (13) of the conveyor belt (15) and then vertically relative thereto.

8. A device according to claim 7 characterised in that the jaw (24) which is movable firstly parallel to the surface (13) of the conveyor belt (15) and then vertically relative thereto has at its end a bending face (30) and at the staple member side, in accordance with the number of legs (8) of the staple members (6), pressure faces (31, 32) which are displaced relative to each other and which are substantially parallel and which are arranged inclinedly relative to the surface (15) of the conveyor belt (13), wherein the bending face (30) also goes in an arcuate configuration into the front pressure face (31).

## Revendications

1. Elément d'attache pour une bande transporteuse, comprenant des branches (2, 3) reliées par des oeillets (4) pour une barre d'accouplement ainsi que, pour des crochets (6), des orifices de passage (5) ménages dans les branches (2, 3) et des surfaces d'application (11, 12) pour les extrémités libres (10) des branches (8) des crochets (6), caractérisé en ce que les surfaces d'application (11, 12) sont prévues pour la flexion à plus de 90° des branches (8) des crochets (6) et en ce que l'inclinaison est orientée depuis les orifices de passage (5) des crochets (6) vers les oeillets (4) ainsi qu'en direction de la bande transporteuse (13).

2. Elément d'attache pour bande transporteuse selon la revendication 1, caractérisé en ce que les surfaces d'application inclinées (11, 12) sont disposées de manière décalée les unes par rapport aux autres et de manière sensiblement parallèle entre elles.

3. Elément d'attache pour bande transporteuse selon la revendication 1 ou 2, caractérisé en ce que la surface d'application (10) constitue en même temps le fond d'un évidement (29) qui reçoit l'extrémité libre (10) des branches (8) des crochets (6).

4. Procédé pour la fixation des éléments d'attaches (1), d'après l'une des revendications 1 à 3, aux extrémités (9) de bandes transporteuses (13) à l'aide de crochets (6), les branches (8) des crochets (6) étant enfoncées à travers l'extrémité (9) de la bande transporteuse et à travers les branches (2, 3) de l'élément d'attache de bande transporteuse (1) pour être tout d'abord partiellement rabattues et ensuite complètement rabattues dans une autre opération de travail, caractérisé en ce que les extrémités libres (10) des branches (8) des crochets (6) sont comprimées dans une position inclinée en direction de l'extrémité (9) de la bande transporteuse.

5. Procédé selon la revendication 4, caractérisé en ce que l'impact de la pression sur les extrémités libres (10) des branches (8) des crochets (6) se fait sentir dans une zone définie à proximité des pointes (26) des crochets (6).

6. Procédé selon la revendication 4 ou 5, caractérisé en ce que l'impact de la pression sur les extrémités libres (10) des branches (8) des crochets (6) se fait sentir à côté des plans (27) dans lesquels se trouvent les parties médianes (28) des branches (8).

7. Dispositif pour la mise en oeuvre du procédé selon l'une des revendications 4 à 6, dans lequel il est respectivement prévu un outil de dessous mobile (21) et un outil de dessus mobile (22) ainsi que leurs entraînements respectifs, caractérisé en ce que l'outil de dessous (21) est prévu pour l'enfoncement et le maintien des crochets (6) et en ce que l'outil de dessus (22) comprend un serre-flan (25) et une mâchoire (24) mobile tout d'abord de manière sensiblement parallèle à la surface (13) de la bande transporteuse (15) et ensuite verticalement à cette surface.

8. Dispositif selon la revendication 7, caractérisé en ce que la mâchoire (24) mobile, tout d'abord, parallèlement à la surface (13) de la bande transporteuse (15) et, ensuite, verticalement à cette dernière présente sur la face avant une surface de flexion (30) et présente, côté crochet, en fonction du nombre des branches (8) des crochets (6) des surfaces de pression (31, 32) qui sont disposées en décalé les unes par rapport aux autres et qui sont inclinées de manière sensiblement parallèle ainsi que de manière inclinée par rapport à la surface (15) de la bande transporteuse (13), la surface de flexion (30) se continuant en arc par la surface avant de pression (31).
